# FASCICULE DE BREVET EUROPEEN

(11) **EP 1 478 705 B1**
(45) Date de publication et mention de la délivrance du brevet: **19.01.2011**
(21) Numéro de dépôt: 03718911.5
(22) Date de dépôt: 26.02.2003
(51) Int. Cl.: C09D 7/12, C08K 3/22

(54) **UTILISATION D'UN SOL ORGANIQUE DE CERIUM DANS LES PEINTURES,NOTAMMENT LES LASURES OU LES VERNIS**
VERWENDUNG EINES ORGANISCHEN CERSOLS FÜR LACKE, INSBESONDERE FÜR LASUREN ODER FIRNISSE
USE OF AN ORGANIC SOL OF CERIUM IN PAINTS, PARTICULARLY LACQUERS AND VARNISHES

(30) Priorité: 27.02.2002 FR 0202470
(43) Date de publication de la demande: 24.11.2004
(73) Titulaire: Rhodia Electronics and Catalysis, 17041 La Rochelle (FR)
(72) Inventeur: BOUSSEAU, Jean-Noel, F-75019 Paris (FR); ECHALIER, Bruno, F-75006 Paris (FR); FAUCHADOUR, David, F-75011 Paris (FR)
(74) Mandataire: Dubruc, Philippe
(86) Numéro de dépôt international: PCT/FR2003/000624
(87) Numéro de publication internationale: WO 2003/072663

(56) Documents cités:
- EP-A- 0 671 205
- EP-A- 0 732 356
- DE-A- 19 907 703
- US-A- 4 886 624
- US-A- 5 376 304

## Description

La présente invention concerne l'utilisation d'un sol organique de cérium dans les peintures, notamment les lasures ou les vernis.

De nombreuses substances sont actuellement utilisées dans l'industrie du meuble, de la menuiserie, du parquet et de la construction pour protéger le bois des dégradations dues à la lumière et aux intempéries notamment. On sait que les rayonnements UV combinés avec l'eau et l'oxygène ont pour effet de décolorer rapidement celui-ci. Par ailleurs, lorsque le bois est utilisé tout particulièrement à l'extérieur il est aussi nécessaire de le protéger contre le développement d'algues, de champignons et de divers micro-organismes.

Les peintures et notamment les lasures et les vernis sont couramment employés pour une telle protection du bois.

Toutefois, les lasures et vernis connus, qui sont des formules complexes à base de produits organiques comme des complexes d'isocyanates par exemple, de produits minéraux comme les oxydes de fer, ou encore d'additifs protecteurs comme les absorbeurs UV (benzotriazole par exemple) présentent une durabilité ou un effet de protection vis à vis des UV qui n'est pas totalement satisfaisante. Les absorbeurs UV organiques peuvent en effet se dégrader dans le temps, ils peuvent migrer en surface ou être lessivés par les intempéries. Les absorbeurs UV minéraux connus comme les dioxydes de titane nécessitent d'être utilisés dans des concentrations suffisamment élevées pour être efficaces vis à vis des UV mais l'augmentation des concentrations se fait au détriment de la transparence, de la tenue à l'eau ou de la tenue mécanique du vernis ou de la lasure. Par ailleurs, on note un développement de plus en plus important des formulations réticulables aux UV. Or, les absorbeurs UV organiques, peuvent bloquer la réticulation des formulations lors de leur application sur le bois.

Il y a donc un besoin pour des peintures et des lasures ou vernis à durabilité plus élevée. Ce besoin existe non seulement dans l'industrie du bois comme indiqué plus haut mais aussi dans d'autres domaines comme la cosmétique, la protection d'encres, de pigments photosensibles ou plus généralement de tout volume situé derrière une surface demandant à être protégée des actions nuisibles des UV, de l'eau et de l'oxygène ou de l'un de ces éléments.

L'objet de l'invention est donc d'améliorer cette durabilité.

Dans ce but, l'invention réside dans l'utilisation d'un sol organique de cérium dans une composition du type peinture, notamment lasure ou vernis, comme additif améliorant la durabilité de la composition, ce sol organique de cérium consistant en des particules de cérium sous forme d'agglomérats de cristallites dont le d₈₀ est au plus égal à 10 nanomètres, en un système acide amphiphile et en une phase organique, le système acide amphiphile comportant au moins un acide de 11 à 50 atomes de carbone, présentant au moins une ramification en alpha, bêta, gamma ou delta de l'atome porteur de l'hydrogène acide.

Les compositions incorporant un tel sol présentent une tenue à l'eau et une tenue mécanique qui sont améliorées, ce qui augmente ainsi leur durée de vie ou la durée de leur présence sur le substrat qu'elles protègent. Leur tenue au vieillissement peut être aussi augmentée.

En outre, l'utilisation d'un sol selon l'invention permet de conserver ces avantages même dans les compositions réticulables aux UV.

D'autres caractéristiques, détails et avantages de l'invention apparaîtront encore plus complètement à la lecture de la description qui va suivre, ainsi que des divers exemples concrets destinés à l'illustrer.

Dans la présente description le terme « peinture » est employé pour désigner un revêtement de nature polymérique déposé sur un substrat et plus précisément les peintures organiques à proprement parler, les vernis et les lasures. Les termes « lasure » et « vernis » ont le sens habituel dans le domaine technique concerné ici. On précisera pour la lasure qu'il s'agit généralement d'une formulation ou composition transparente ou semi-transparente appliquée sur le bois et destinée à le protéger et dont la teneur en extrait sec peut être de l'ordre de 10% en poids ou de l'ordre de 40% à 50% en poids selon qu'il s'agit d'une lasure primaire ou de finition. Pour le vernis il s'agit d'une formulation ou d'une composition plus concentrée que la lasure.

On peut citer ainsi comme compositions concernées par la présente invention, les peintures à base des résines suivantes : résines alkydes dont la plus courante est dénommée glycérophtalique; les résines modifiées à l'huile longue ou courte; les résines acryliques dérivées des esters de l'acide acrylique (méthylique ou éthylique) et méthacrylique éventuellement copolymérisés avec l'acrylate d'éthyle, d'éthyl-2 hexyle ou de butyle; les résines vinyliques comme par exemple l'acétate de polyvinyle, le chlorure de polyvinyle, le butyralpolyvinylique, le formalpolyvinylique, et les copolymères chlorure de vinyle et acétate de vinyle ou chlorure de vinylidène; les résines aminoplastes ou phénoliques le plus souvent modifiées; les résines polyesters; les résines polyuréthannes; les résines époxy; les résines silicones; les résines cellulosiques ou nitrocellulosiques.

L'invention concerne les peintures, notamment vernis ou lasures, dans leur utilisation sur un substrat en bois dans l'industrie du bois mais aussi sur d'autres substrats par exemple dans l'industrie cosmétique ou dans celle de l'automobile.

L'expression « sol de cérium » ou « dispersion colloïdale de cérium » désigne tout système constitué de fines particules solides d'un composé du cérium, de dimensions colloïdales, en suspension dans une phase liquide, lesdites particules pouvant, en outre, éventuellement contenir des quantités résiduelles d'ions liés ou adsorbés tels que par exemple des ions acétates ou des ammoniums. Par dimensions colloïdales, on entend des dimensions comprises entre environ 1 nm et environ 500nm. On notera que dans une telle dispersion, le cérium peut se trouver soit totalement sous la forme de colloïdes, soit simultanément sous la forme d'ions et sous la forme de colloïdes.

Le cérium est présent dans le sol généralement sous forme d'oxyde et/ou d'oxyde hydraté (hydroxyde) de cérium, le cérium étant principalement sous forme de cérium IV. Par exemple, la teneur en cérium III par rapport au cérium IV (teneur exprimée par le rapport atomique Ce III/Ce total) est de préférence d'au plus 5%, plus particulièrement d'au plus 1%, et encore plus particulièrement d'au plus 0,5%.

Les particules du sol de cérium ont de préférence une taille d'au plus 200nm, plus particulièrement d'au plus 100nm.

Ici et pour l'ensemble de la description, la granulométrie est déterminée par microscopie électronique à transmission (MET), de manière classique, sur un échantillon préalablement séché sur une membrane de carbone supportée sur grille de cuivre.

Le sol ou la dispersion de cérium utilisé dans la présente invention est un sol ou une dispersion organique. C'est à dire que la phase liquide est une phase organique.

A titre d'exemple de phase organique, on peut citer les hydrocarbures aliphatiques comme l'hexane, l'heptane, l'octane, le nonane, les hydrocarbures cycloaliphatiques inertes tels que le cyclohexane, le cyclopentane, le cycloheptane, les hydrocarbures aromatiques tels que le benzène, le toluène, l'éthylbenzène, les xylènes, les naphtènes liquides. Conviennent également les coupes pétrolières du type Isopar ou Solvesso

(marques déposées par la Société EXXON), notamment Solvesso 100 qui contient essentiellement un mélange de méthyléthyl- et triméthyl-benzène, le Solvesso 150 qui renferme un mélange d'alcoylbenzènes en particulier de diméthylbenzène et de tétraméthylbenzène et l'isopar qui contient essentiellement des hydrocarbures iso- et cyclo-paraffiniques en C-11 et C-12.

On peut mettre en oeuvre également pour la phase organique des hydrocarbures chlorés tels que le chloro- ou le dichloro-benzène, le chlorotoluène. Les éthers ainsi que les cétones aliphatiques et cycloaliphatiques comme par exemple l'éther de diisopropyle, l'éther de dibutyle, la méthyléthylcétone, la méthylisobutylcétone, la diisobutylcétone, l'oxyde de mésityle, peuvent être envisagés.

Les esters peuvent être envisagés, mais ils présentent l'inconvénient de risquer d'être hydrolysés. On peut citer comme esters susceptibles d'être utilisés ceux issus de la réaction d'acides avec des alcools en C1 à C8 et notamment les palmitates d'alcools secondaires tel l'isopropanol. On peut mentionner l'acétate de butyle à titre d'exemple.

Bien entendu, la phase organique peut être à base d'un mélange de deux ou plusieurs hydrocarbures ou composés du type décrit ci-dessus.

Comme sols de cérium tout particulièrement adaptés à l'utilisation de la présente invention, on peut mentionner ceux du type décrit dans la demande de brevet EP-A-671205 à la description de laquelle on pourra se référer.

Le sol de l'invention se caractérise par un système acide amphiphile spécifique.

En effet, ce système comporte au moins un acide de 11 à 50 atomes de carbone, présentant au moins une ramification en alpha, bêta, gamma ou delta de l'atome porteur de l'hydrogène acide.

Le domaine préféré est de 15 à 25 atomes de carbone pour les acides dudit système amphiphile.

Pour obtenir de meilleurs résultats, surtout quand la longueur de chaîne est faible (inférieure à 14 atomes de carbone), lorsque la ramification est unique et surtout lorsqu'elle est située en position gamma ou delta de l'atome porteur de l'hydrogène acide, il est très souhaitable que cette ramification soit d'au moins deux atomes de carbone, avantageusement trois.

On préfère que la partie linéaire la plus longue soit d'au moins 6, de préférence 8 carbones.

Il est avantageux que le pKa d'au moins un des acides soit au plus égal à 5, de préférence à 4,5.

Il est également avantageux que la ou les chaîne(s) latérale(s) des acides ramifiés comportent au moins deux atomes, de préférence trois atomes de carbone.

Ces acides peuvent être des acides aryliques, aliphatiques ou arylaliphatiques, portant éventuellement d'autres fonctions à condition que ces fonctions soient stables dans les milieux où l'on désire utiliser les dispersions selon la présente invention.

Ainsi, on peut mettre en oeuvre par exemple des acides carboxyliques aliphatiques, des acides sulfoniques aliphatiques, des acides phosphoniques aliphatiques, des acides alcoylarylsulfoniques et des acides alcoylarylphosphoniques possédant environ de 10 à environ de 40 atomes de carbone, qu'ils soient naturels ou synthétiques.

On peut aussi utiliser des acides carboxyliques dont la chaîne carbonée porte des fonctions cétoniques comme les acides pyruviques substitués en alpha de la fonction cétone. Cela peut être également des acides alpha-halogéno carboxyliques ou des acides alpha-hydroxycarboxyliques. La chaîne rattachée au groupe carboxylique peut porter des insaturations. Toutefois en général on tend à éviter de trop nombreuses doubles liaisons car le cérium catalyse la réticulation des doubles liaisons. La chaîne peut être interrompue par des fonctions éther ou ester à condition de ne pas trop altérer la lipophilicité de la chaîne porteuse du groupe carboxylique.

On peut citer comme acides particulièrement intéressants les acides constitutifs du mélange d'acides connu sous le nom d'acide isostéarique.

La quantité d'acide amphiphile mise en oeuvre exprimée en nombre de moles d'acide par mole d'oxyde cérique peut varier dans de larges limites par exemple entre 1/10 et 1 mole par mole d'oxyde cérique. La borne supérieure ne présente pas de caractère critique mais il n'est pas nécessaire de mettre en jeu davantage d'acide. D'une manière préférentielle, l'acide amphiphile est mis en oeuvre à raison de 1/5 à 4/5 mole par mole d'oxyde cérique. Ce rapport molaire est calculé ici en prenant comme mole d'acide amphiphile, le nombre de mole multiplié par le nombre n de fonctions acides utiles. Plus précisément le nombre d'équivalents d'acide représente le nombre de molécules d'acide lorsque l'acide utilisé est monofonctionnel, et il faut doubler ou tripler ce nombre, dans le cas de diacides ou triacides et, plus généralement, le multiplier par le nombre de fonctions acides dans le cas d'un polyacide.

Dans la phase organique, la proportion entre la phase organique et le ou les acides amphiphiles n'est pas critique. Le rapport pondéral entre la phase organique et le ou les acides amphiphiles est choisi, de préférence, entre 0,3 et 2,0.

La caractéristique principale du sol réside aussi dans la taille de ses particules.

Ainsi, le d₈₀, avantageusement le d₉₀, des particules constituées d'agglomérats de cristallites, peut être au plus égal à 10 nanomètres et plus particulièrement au plus égal à 8 nanomètres.

Les cristallites qui constituent les agglomérats et donc les particules ont une taille au plus égale à 5 nanomètres.

Selon une variante, 80% (en masse) des agglomérats comportent de 3 à 4 cristallites.

Dans la présente description, les caractéristiques de granulométrie font référence à des notations du type dₙ où n est un nombre de 1 à 99. Cette notation représente la taille des objets telle que n % en nombre desdits objets ont une taille inférieure ou égale à ladite taille. Par exemple, un d₈₀ de 5 nanomètres signifie que 80 % en nombre des objets ont une taille inférieure ou égale à 5 nanomètres.

La détermination de l'état d'agglomération des particules se fait par examen de la dispersion par MET (microscopie électronique à transmission haute résolution) ou aussi en utilisant la technique de cryo-MET. Cette technique permet d'observer par microscopie électronique à transmission (MET) des échantillons maintenus congelés dans leur milieu naturel qui est soit de l'eau soit des diluants organiques tels que les solvants aromatiques ou aliphatiques comme par exemple le Solvesso et l'isopar ou bien certains alcools tel que l'éthanol.

La congélation s'effectue sur des films minces d'environ 50 à 100 nm d'épaisseur soit dans l'éthane liquide pour les échantillons aqueux soit dans l'azote liquide pour les autres.

La teneur en eau du sol est de préférence au plus égale à 1%, plus particulièrement au plus égale à 0,1% et encore plus préférentiellement d'au plus 100ppm.

Le sol peut être préparé par le procédé enseigné par EP-A-671205 auquel on pourra aussi se référer à ce sujet. Ce procédé consiste essentiellement à faire subir une hydrolyse à une phase aqueuse contenant du cérium, généralement une solution aqueuse de sels de cérium IV, de manière à faire précipiter de l'oxyde cérique. L'hydrolyse se fait en chauffant la phase aqueuse à une température qui peut être d'au moins 80°C. Dans un deuxième temps ou, éventuellement simultanément, on met en contact la suspension d'oxyde de cérium ainsi obtenue avec une phase organique comprenant le système amphiphile précité.

La mise en oeuvre du sol de cérium dans la peinture, la lasure ou le vernis se fait par simple mélange du sol avec cette peinture, cette lasure ou ce vernis. La quantité de sol utilisée est fonction de la teneur finale souhaitée en oxyde de cérium dans la composition peinture. Cette teneur peut être quelconque. On peut noter qu'il est possible de travailler avec des teneurs élevées en cérium sans pour autant nuire à la résistance à l'eau ou à la résistance mécanique de la peinture, de la lasure ou du vernis. Généralement, on utilise un sol en quantité telle que la teneur en oxyde de cérium est d'au plus 25% en poids, de préférence d'au plus 10% en poids et encore plus préférentiellement d'au plus 3% en poids par rapport à l'ensemble de la composition. Cette quantité est suffisante pour permettre d'avoir en même temps une peinture, une lasure ou un vernis qui assure une protection efficace du substrat, notamment du bois, contre les UV et qui présente une durabilité renforcée.

Il est aussi possible de sécher un sol du type décrit précédemment, par exemple par évaporation, de manière à obtenir un produit sous forme de poudre ou de gel. Ce produit peut, par la suite, être remis en dispersion dans une phase organique du type décrit plus haut de manière à obtenir de nouveau un sol qui pourra être incorporé à la peinture, à la lasure ou au vernis de la manière qui vient d'être décrite.

L'invention s'applique à tout type de peintures organiques ou en phase solvant, notamment à tout type de lasures ou de vernis, utilisées sur tout susbtrat. Ce substrat peut être notamment le bois ou les métaux, dans ce dernier cas par exemple l'invention peut s'appliquer aux peintures pour automobiles. Le substrat peut aussi être un verre, du type des verres utilisés dans le bâtiment, ou des verres destinés à contenir des produits ou des matériaux photo-sensibles. D'autres substrats possibles sont les revêtements protecteurs d'emballage organiques ou minéraux, notamment lorsque l'on cherche à conserver la transparence dans le domaine de la lumière visible.

L'invention s'applique aussi aux vernis utilisés en cosmétique. De plus, l'invention s'applique avantageusement aux compositions, aux lasures notamment, réticulables aux UV, c'est à dire les lasures qui immédiatement après leur dépôt sur le substrat, notamment sur le bois, sont soumis à un traitement aux rayons ultra-violet pour leur séchage.

On notera enfin que les compositions de peintures, lasures et vernis obtenues par la mise en oeuvre de l'invention répondent aux contraintes écologiques de par le caractère non écotoxique de l'oxyde de cérium.

Des exemples vont maintenant être donnés.

Dans ces exemples on met en oeuvre les tests décrits ci-dessous.

### Colorimétrie

### Conditions de mesure :

Les mesures colorimétriques sont effectuées suivant la norme ISO 7724 à l'aide d'un spectrocolorimétre MINOLTA CM 3610D.

Les conditions de mesure sont les suivantes :
- spéculaire inclue (on mesure toute l'intensité rétrodiffusée)
- les ultraviolets sont filtrés à 100%
- les résultats sont exprimés sous le couple illuminant/observateur C/10°

Les mesures ont été réalisées sur des cartes à contraste, la peinture étant appliquée à 150 microns (peinture à l'état humide). Afin de mesurer la transparence, les mesures sont effectuées sur le fond noir des cartes à contraste.

### Tenue à l'eau

### Conditions de mesure :

La tenue à l'eau est évaluée par une mesure d'angle de contact entre une goutte d'eau et la lasure à l'aide d'un goniomètre RAME & HART. Plus l'angle de goutte est élevé, plus la lasure est hydrophobe et donc moins sensible à l'eau. Les lasures sont appliquées sur une carte à contraste, les lasures sont appliquées au tire-film à une épaisseur de 150 microns.

### Vieillissement

Deux tests de vieillissements ont été utilisés.

Le premier test est du type QUVA. Il se fait dans les conditions suivantes:
- Conditions d'irradiation : lampe UVA avec un pic centré à 340 nm
- Température de chambre : 60°C
- Cycle de fonctionnement : 4 heures d'irradiation en phase sèche à une température de 60°C puis 4 heures de condensation à l'obscurité à une température de 60°C.

L'humidité est apportée en réchauffant un bac d'eau situé au fond de l'appareil (on produit donc de l'eau vapeur) puis cette eau se condense sur les plaques de peintures.

Le second test est un test de vieillissement accéléré appelé XENOTEST (ISO 4892) réalisé dans les conditions suivantes :
- Conditions d'irradiation : lampe à arc xénon avec filtres suprax simulant un éclairage solaire à peu près cent fois plus intense, l'irradiance est régulée à 65 W/m²
- Température de chambre : 30°C
- Cycle de fonctionnement : 27 minutes d'irradiation en phase sèche à t=30°C puis 3 minutes d'irradiation en phase humide à t=30°C.

L'apport d'humidité se fait par aspersion directement d'eau liquide sur les plaques à tester par le moyen de buses.

### Tenue mécanique

La tenue mécanique des lasures est mesurée de deux manières :
Une mesure de dureté du feuil de lasure est réalisée à l'aide du test de dureté Persoz. Ce test est réalisé selon la norme NFT 30-016 (peintures et vernis - mesure de la dureté d'un feuil de peinture ou de vernis à l'aide du pendule de PERSOZ). Ce test est réalisé sur les feuils de vernis appliqués à 150µm (peinture à l'état humide) à l'aide d'un applicateur d'épaisseur calibrée sur des plaques de verre. Le principe de caractérisation est de mesurer le temps d'amortissement d'un pendule reposant, par l'intermédiaire de deux billes d'acier, sur le feuil à étudier. La dureté est exprimée en secondes (temps d'une oscillation), ce qui correspond au nombre d'oscillations du pendule lorsque celui est incliné de 12° par rapport à la normale au départ et 4° ce qui correspond à la fin du test.
Une mesure de résistance à la rayure est réalisée à l'aide d'un scléromètre BRAIVE. Le scléromètre est un stylet muni d'une pointe en tungstène sur lequel on applique une pression variable à l'aide de ressort calibré (la pression est exprimée en grammes). La résistance à la rayure est la pression maximale (en grammes) à laquelle la pointe en tungstène du stylet ne laisse aucune trace. Ce test est réalisé sur les feuils de vernis appliqués à 150µm (peinture à l'état humide) à l'aide d'un applicateur d'épaisseur calibré sur des plaques de verre.

Dans les exemples qui suivent le sol de l'invention est un sol dont les particules sont sous forme d'agglomérats de cristallites dont le d₈₀ des particules est au plus égal à 8 nanomètres, les particules comportant de 2 à 5 cristallites. La phase organique du sol est constituée par de l'Isopar L et l'acide amphiphile est un acide isostéarique (Prisorine 3501 de la société Unichema International).

Pour l'ensemble des exemples le produit comparatif à base d'un absorbeur UV organique est le TINUVIN 1130 de la société Ciba et le produit comparatif à base d'un absorbeur UV minéral (oxyde de titane) est le Hombitec RM 400 de la société Sachtleben.

### EXEMPLE 1

Cet exemple concerne une utilisation dans une lasure de formulation classique du type alkyde du type longue en huile dans du white spirit à 42% d'extrait sec.

Le sol de l'invention est incorporé par simple mélange à une teneur de 1,63% en matière active (oxyde de cérium) par rapport au total de la formulation. Le produit comparatif (2) à base d'absorbeur UV organique est incorporé de la même manière que précédemment à une teneur de 1% par rapport au total. Le produit comparatif (3) à base d'absorbeur UV minéral est incorporé de la même manière que précédemment à une teneur de 1,63% en matière sèche par rapport au total.

Les formulations ainsi réalisées sont appliquées sur différents supports et subissent un conditionnement à l'air en atmosphère contrôlée (21°C +/- 2°C, 55% +/- 5% d'humidité relative) pendant une semaine avant leur évaluation.

**Tableau 1**

| Formulation | Description |
|---|---|
| 1 comparatif | Lasure alkyde sans absorbeur UV |
| 2 comparatif | Lasure avec 1 % absorbeur UV organique |
| 3 comparatif | Lasure avec 1,63% absorbeur UV minéral |
| 4 selon l'invention | Lasure avec 1,63% sol de cérium (oxyde de cérium) |

Les résultats des mesures colorimétriques sont donnés dans le tableau 2 ci-dessous.

**Tableau 2**

| | Fond noir | | |
|---|---|---|---|
| Formulation | L* | a* | b* |
| 1 comparatif | 27,55 | 0,22 | 0,35 |
| 2 comparatif | 27,7 | 0,24 | 0,26 |
| 3 comparatif | 32,57 | 0,28 | -5,77 |
| 4 selon l'invention | 27,55 | 0,14 | 0,34 |

On constate à partir du tableau 2 que la teinte des lasures selon l'invention ne subit pratiquement aucune variation.

Les résultats des mesures de tenue à l'eau sont donnés dans le tableau 3 qui suit.

**Tableau 3**

| Formulation | Angle de contact (°) |
|---|---|
| 1 comparatif | 77 |
| 2 comparatif | 76 |
| 3 comparatif | 79 |
| 4 selon l'invention | 104 |

On note une amélioration de la tenue à l'eau, voir un effet perlant pour la lasure selon l'invention ce qui la rend par la même hydrophobe.
Le tableau 4 ci-dessous récapitule les résultats de vieillissement obtenus à partir d'un test du type QUVA. Les lasures ont été appliquées sur des plaques de pin maritime à l'aide d'une brosse de façon à avoir un grammage de 325 g/m².
On note l'écart de teinte (dE*) à deux temps d'exposition : 25 cycles et 135 cycles.

**Tableau 4**

| formulation | dE* à 25 cycles d'exposition | dE* à 135 cycles d'exposition |
|---|---|---|
| 1 Comparatif | 14 | 22 |
| 2 Comparatif | 11 | 20 |
| 4 selon l'invention | 9 | 14 |

Les temps sont exprimés en cycles de 8 heures.
Le produit 4 améliore nettement la tenue au vieillissement de la peinture.

### EXEMPLE 2

Cet exemple concerne une utilisation dans une lasure de formulation industrielle classique du type cellulosique ayant pour référence commerciale SU4030 en provenance de la société ARCH COATINGS FRANCE.

Le sol de l'invention est incorporé par simple mélange à une teneur de 1,4% en matière active (oxyde de cérium) par rapport au total de la formulation. Le produit comparatif (6) à base d'absorbeur UV organique est incorporé de la même manière que précédemment à une teneur de 0,3% par rapport au total, dose optimale à laquelle le produit a un effet filtre UV nécessaire et suffisant pour ce type de produit.

Les formulations ainsi réalisées sont appliquées sur différents supports et subissent un conditionnement à l'air pendant une semaine avant leur évaluation.

**Tableau 5**

| Formulation | Description |
|---|---|
| 5 comparatif | Lasure SU4030 sans absorbeur UV |
| 6 comparatif | Lasure avec 0,3% absorbeur UV organique |
| 7 selon l'invention | Lasure avec 1,4% sol de cérium (oxyde de cérium) |

Les résultats des mesures de tenue à l'eau sont donnés dans le tableau 6 qui suit.

**Tableau 6**

| Formulation | Angle de contact (°) |
|---|---|
| 5 comparatif | 90 |
| 6 comparatif | 95 |
| 7 selon l'invention | 116 |

On note une amélioration de la tenue à l'eau, voir un effet perlant pour la lasure selon l'invention ce qui rend la lasure hydrophobe.

Le tableau 7 ci-dessous récapitule les résultats de vieillissement obtenus à partir d'un test du type QUVA. Les lasures ont été appliquées sur des plaques de merisier américain à l'aide d'un pistolet pneumatique en deux couches (un égrenage est effectué entre les deux applications) de façon à avoir un grammage de 2 fois 120 g/m².

On note l'écart de teinte (dE*) à deux temps d'exposition : 10 cycles et 35 cycles.

**Tableau 7**

| formulation | dE* à 10 cycles d'exposition | dE* à 35 cycles d'exposition |
|---|---|---|
| 5 comparatif | 27 | 31 |
| 6 comparatif | 14 | 26 |
| 7 selon l'invention | 14 | 23 |

Les temps sont exprimés en cycles de 8 heures.
Le produit 7 améliore la tenue au vieillissement de la lasure.

Le tableau 8 ci-dessous récapitule les résultats de tenue mécanique.

**Tableau 8**

| formulation | Dureté PERSOZ (secondes) | Résistance à la rayure (grammes) |
|---|---|---|
| 5 comparatif | 150 | 500 |
| 6 comparatif | 175 | 450 |
| 7 selon l'invention | 260 | 600 |

Le produit 7 améliore nettement la tenue mécanique de la lasure.

### EXEMPLE 3

Cet exemple concerne une utilisation dans une lasure de formulation industrielle classique du type polyuréthanne ayant pour référence commerciale TU7425 catalysée avec un durcisseur ayant pour référence commerciale TH790 en provenance de la société ARCH COATINGS FRANCE.

Le produit de l'invention (10) est incorporé par simple mélange à une teneur de 1,3% en matière active (oxyde de cérium) par rapport au total de la formulation. Le produit comparatif (9) à base d'absorbeur UV organique est incorporé de la même manière que précédemment à une teneur de 0,3% par rapport au total ce qui correspond à une dose nécessaire et suffisante pour avoir un effet filtre UV optimal pour ce type de produit.
Le catalyseur TH790 est additionné à la formulation TU7425 juste avant application à raison de 1 part de catalyseur pour 10 parts de formulation TU7425.
Les formulations ainsi réalisées sont appliquées sur différents supports et subissent un conditionnement à l'air pendant une semaine avant leur évaluation.

**Tableau 9**

| Formulation | Description |
|---|---|
| 8 comparatif | Lasure TU7425 sans absorbeur UV |
| 9 comparatif | Lasure avec 0,3% absorbeur UV organique |
| 10 selon l'invention | Lasure avec 1,3% sol de cérium (oxyde de cérium) |

Les résultats des mesures colorimétriques sont donnés dans le tableau 10 ci-dessous.

**Tableau 10**

| | Fond noir | | |
|---|---|---|---|
| Formulation | L* | a* | b* |
| 8 comparatif | 27,39 | 0,30 | 0,53 |
| 9 comparatif | 27.30 | 0,21 | 0,30 |
| 10 selon l'invention | 27,30 | 0,17 | 0,53 |

On constate à partir du tableau 10 que la teinte des lasures selon l'invention ne subit pratiquement aucune variation.

Les résultats des mesures de tenue à l'eau sont donnés dans le tableau 11 qui suit.

**Tableau 11**

| formulation | Angle de contact (°) |
|---|---|
| 8 comparatif | 73 |
| 9 comparatif | 76 |
| 10 selon l'invention | 84 |

On note une amélioration de la tenue à l'eau pour la lasure selon l'invention.

Le tableau 12 ci-dessous récapitule les résultats de vieillissement obtenus à partir d'un test du type XENOTEST. Les lasures ont été appliquées sur des plaques de merisier américain à l'aide d'un pistolet pneumatique en deux couches (un égrenage est effectué entre les deux applications) de façon à avoir un grammage de 2 fois 120 g/m².

On note l'écart de teinte (dE*) après 234 heures d'exposition.

**Tableau 12**

| Formulation | dE* après 234 heures d'exposition |
|---|---|
| 8 comparatif | 13 |
| 9 comparatif | 11 |
| 10 selon l'invention | 6 |

Le produit 10 améliore nettement la tenue au vieillissement de la lasure.

Le tableau 13 ci-dessous récapitule les résultats de tenue mécanique.

**Tableau 13**

| Formulation | Dureté PERSOZ (secondes) | Résistance à la rayure (grammes) |
|---|---|---|
| 8 comparatif | 260 | 250 |
| 9 comparatif | 290 | 250 |
| 10 selon l'invention | 300 | 350 |

Le produit 10 améliore nettement la tenue mécanique de la lasure.

### EXEMPLE 4

Cet exemple concerne une utilisation dans une lasure de formulation industrielle classique du type réticulable UV ayant pour référence commerciale HZ0294 en provenance de la société ARCH COATINGS FRANCE.

Le produit de l'invention (12) est incorporé par simple mélange à une teneur de 2,25% en matière active (oxyde de cérium) par rapport au total de la formulation.

Les formulations ainsi réalisées sont appliquées sur du hêtre par pistolage en deux couches (un égrenage est réalisé entre les deux couches) de façon à atteindre un grammage de 2 fois 40 g/m². Après un temps de désolvatation de 10 minutes, chaque couche est réticulée par exposition sous lampes UV au mercure à une vitesse de 7 m/minute en deux passages. L'énergie reçue par les échantillons est consignée dans le tableau 14 :

**Tableau 14**

| radiation | uva | uvb | uvc | uvv |
|---|---|---|---|---|
| puissance (W) | 213 | 139 | 25 | 138 |
| énergie (J) | 376 | 314 | 44 | 248 |

**Tableau 15**

| Formulation | Description |
|---|---|
| 11 comparatif | Lasure HZ0294 sans absorbeur UV |
| 12 selon l'invention | Lasure avec 2,25% sol de cérium (oxyde de cérium) |

Le tableau 16 ci-dessous récapitule les résultats de vieillissement obtenus à partir d'un test du type QUVA. Les lasures ont été appliquées sur des plaques de hêtre à l'aide d'un pistolet pneumatique en deux couches (un égrenage est effectué entre les deux applications) de façon à avoir un grammage de 2 fois 40 g/m².

On note l'écart de teinte (dE*) à deux temps d'exposition : 10 cycles et 35 cycles.

**Tableau 16**

| Formulation | dE* à 10 cycles d'exposition | dE* à 35 cycles d'exposition |
|---|---|---|
| 11 comparatif | 16 | 19 |
| 12 selon l'invention | 8 | 15 |

Les temps sont exprimés en cycles de 8 heures.
Le produit 12 améliore nettement la tenue au vieillissement de la lasure.

### EXEMPLE 5

Cet exemple concerne une utilisation dans une application en lasure et dans un système de formulations industrielles classique du type réticulable UV. Ce système comporte une lasure d'imprégnation ayant pour référence commerciale HL0106 et une lasure de finition ayant pour référence commerciale HL0121 en provenance de la société ARCH COATINGS FRANCE.

Le produit de l'invention (14) est incorporé par simple mélange à une teneur de 1,7% en matière active (oxyde de cérium) par rapport au total de la formulation.

Les formulations ainsi réalisées sont appliquées sur du hêtre par pistolage en deux couches (un égrenage est réalisé entre les deux couches) de façon à atteindre un grammage de 2 fois 40 g/m². Après un temps de désolvatation de 3 minutes, chaque couche est réticulée par exposition sous lampes UV au gallium à une vitesse de 7 m/minute en un passage.

**Tableau 17**

| Formulation | Description |
|---|---|
| 13 comparatif | Lasures HL0106 et HL0121 sans absorbeur UV |
| 14 selon l'invention | Lasure avec 1,7% sol de cérium (oxyde de cérium) |

Les résultats des mesures colorimétriques sont donnés dans le tableau 18 ci-dessous.

Les mesures ont été réalisées sur les plaques de hêtre décrites précédemment.

**Tableau 18**

| | HÊTRE | | |
|---|---|---|---|
| Formulation | L* | a* | b* |
| 13 comparatif | 68,61 | 10,08 | 25,60 |
| 14 selon l'invention | 68,90 | 9,60 | 25,76 |

On constate à partir du tableau 18 que la teinte des lasures selon l'invention ne subit pratiquement aucune variation.

Les résultats des mesures de tenue à l'eau sont donnés dans le tableau 20 qui suit. Les lasures ont été appliquées sur des plaques de hêtre à un grammage de 2 fois 40g/m².

**Tableau 19**

| formulation | Angle de contact (°) |
|---|---|
| 13 comparatif | 67 |
| 14 | 83 |

La tenue à l'eau est aussi évaluée par une mesure de changement de teinte (dE*) de la lasure après contact avec l'eau. Les essais sont évalués en colorimétrie avant et après 50 minutes de contact entre la lasure appliquées et une goutte d'eau. Plus la différence de teinte est élevée, plus la lasure est hydrophile et donc plus sensible à l'eau. Les lasures sont appliquées sur des plaques de hêtre à un grammage de 2 fois 40g/m².
Les résultats sont donnés dans le tableau 20 qui suit.

**Tableau 20**

| formulation | Ecart de teinte après 50 minutes de contact |
|---|---|
| 13 comparatif | 1,8 |
| 14 selon l'invention | 0,9 |

On note une amélioration de la tenue à l'eau pour la lasure selon l'invention.

Le tableau 21 ci-dessous récapitule les résultats de vieillissement obtenus à partir d'un test du type XENOTEST.

Les lasures ont été appliquées sur des plaques de hêtre à l'aide d'un pistolet pneumatique en deux couches (un égrenage est effectué entre les deux applications) de façon à avoir un grammage de 2 fois 40 g/m².

On note l'écart de teinte (dE*) après 40 heures et 160 heures d'exposition.

**Tableau 21**

| Formulation | dE* après 40 heures d'exposition | dE* après 160 heures d'exposition |
|---|---|---|
| 13 comparatif | 12 | 16 |
| 14 selon l'invention | 8 | 10 |

Le produit 14 améliore nettement la tenue au vieillissement de la lasure.
Un autre test de vieillissement du type QUVA a été réalisé.
Les lasures ont été appliquées sur des plaques de hêtre à l'aide d'un pistolet pneumatique en deux couches (un égrenage est effectué entre les deux applications) de façon à avoir un grammage de 2 fois 40 g/m².
On note l'écart de teinte (dE*) à deux temps d'exposition : 5 cycles et 20 cycles.
Le tableau 22 ci-dessous récapitule les résultats de vieillissement selon ce second test.

**Tableau 22**

| formulation | dE* à 5 cycles d'exposition | dE* à 20 cycles d'exposition |
|---|---|---|
| 13 comparatif | 12 | 18 |
| 14 selon l'invention | 6 | 9 |

Les temps sont exprimés en cycles de 8 heures.
Le produit 14 améliore nettement la tenue au vieillissement de la lasure.

Le tableau 23 ci-dessous récapitule les résultats de tenue mécanique pour des tests réalisés sur des feuils de vernis appliqués à 2 fois 40 g/m² par pistolage sur des plaques de hêtre.

**Tableau 23**

| formulation | Dureté PERSOZ (secondes) | Résistance à la rayure (grammes) |
|---|---|---|
| 13 comparatif | 106 | 150 |
| 14 selon l'invention | 120 | 300 |

Le produit 14 améliore nettement la tenue mécanique de la lasure.

### EXEMPLE 6

Cet exemple concerne une utilisation dans une peinture décorative intérieure satinée de type glycérophtalique ayant pour référence commerciale ANTEOR SATIN en provenance de la société LA SEIGNEURIE.

Le sol de l'invention est incorporé par simple mélange à une teneur de 1,5% en matière active (oxyde de cérium) par rapport au total de la formulation. Les formulations ainsi réalisées sont appliquées sur différents supports et subissent un conditionnement à l'air en atmosphère contrôlée (21 °C +/- 2°C, 55% +/- 5% d'humidité relative) pendant une semaine avant leur évaluation.

**Tableau 24**

| Formulation | Description |
|---|---|
| 15 comparatif | Peinture glycérophtalique sans absorbeur UV |
| 16 selon l'invention | Peinture avec 1,5% sol de cérium (oxyde de cérium) |

Les résultats des mesures de tenue à l'eau sont donnés dans le tableau 25 qui suit.

**Tableau 25**

| Formulation | Angle de contact (°) |
|---|---|
| 15 comparatif | 74 |
| 16 selon l'invention | 100 |

On note une amélioration de la tenue à l'eau, voir un effet perlant pour la peinture selon l'invention ce qui la rend par la même hydrophobe.

Le tableau 26 ci-dessous récapitule les résultats de tenue mécanique.

**Tableau 26**

| Formulation | Dureté PERSOZ (secondes) | Résistance à la rayure (grammes) |
|---|---|---|
| 15 comparatif | 53 | 180 |
| 16 selon l'invention | 62 | 250 |

Le produit 16 améliore la tenue mécanique de la peinture.

### EXEMPLE 7

Cet exemple concerne une utilisation dans une peinture décorative de type laque microporeuse semi-brillante glycérophtalique pour bois ayant pour référence commerciale RESPIR'BOIS en provenance de la société BLANCOLOR.

Le sol de l'invention est incorporé par simple mélange à une teneur de 1,5% en matière active (oxyde de cérium) par rapport au total de la formulation. Les formulations ainsi réalisées sont appliquées sur différents supports et subissent un conditionnement à l'air en atmosphère contrôlée (21 °C +/- 2°C, 55% +/- 5% d'humidité relative) pendant une semaine avant leur évaluation.

**Tableau 27**

| Formulation | Description |
|---|---|
| 17 comparatif | Peinture glycérophtalique sans absorbeur UV |
| 18 selon l'invention | Peinture avec 1,5% sol de cérium (oxyde de cérium) |

Les résultats des mesures de tenue à l'eau sont donnés dans le tableau 28 qui suit.

**Tableau 28**

| Formulation | Angle de contact (°) |
|---|---|
| 17 comparatif | 90 |
| 18 selon l'invention | 100 |

On note une amélioration de la tenue à l'eau, voir un effet perlant pour la peinture selon l'invention ce qui la rend par la même hydrophobe.

Le tableau 26 ci-dessous récapitule les résultats de tenue mécanique.

**Tableau 26**

| Formulation | Dureté PERSOZ (secondes) | Résistance à la rayure (grammes) |
|---|---|---|
| 17 comparatif | 40 | 225 |
| 18 selon l'invention | 45 | 300 |

Le produit 18 améliore la tenue mécanique de la peinture.

## Revendications

1. Utilisation dans une composition du type peinture, comme additif améliorant la durabilité de la composition, d'un sol organique de cérium qui consiste en des particules de cérium sous forme d'agglomérats de cristallites dont le d₈₀ est au plus égal à 10 nanomètres, en un système acide amphiphile et en une phase organique, le système acide amphiphile comportant au moins un acide de 11 à 50 atomes de carbone, présentant au moins une ramification en alpha, bêta, gamma ou delta de l'atome porteur de l'hydrogène acide.

2. Utilisation selon la revendication 1, **caractérisée en ce que** les particules du sol de cérium ont une taille d'au plus 200 nanomètres.

3. Utilisation selon la revendication 1, **caractérisée en ce que** les particules du sol de cérium ont une taille d'au plus 100 nanomètres.

4. Utilisation selon selon l'une des revendications précédentes, **caractérisée en ce que** le sol de cérium comprend des particules de cérium sous forme d'agglomérats de cristallites dont le d₈₀ est au plus égal à 8 nanomètres.

5. Utilisation selon l'une des revendications précédentes, **caractérisée en ce que** 80% (en masse) des agglomérats comportent de 3 à 4 cristallites.

6. Utilisation selon l'une des revendications précédentes, **caractérisée en ce que** le rapport molaire entre le ou les acides du système amphiphile et l'élément cérium est compris entre 1/5 et 4/5.

7. Utilisation selon l'une des revendications précédentes, **caractérisée en ce que** le système acide amphiphile contient de l'acide isostéarique.

8. Utilisation selon l'une des revendications précédentes, **caractérisée en ce que** la teneur en cérium dans la composition, exprimée en oxyde de cérium, est d'au plus 25%, de préférence au plus 3%, en poids par rapport à l'ensemble de la composition.

9. Utilisation selon l'une des revendications précédentes, **caractérisée en ce que** la composition est une composition, notamment une lasure, réticulable aux UV.

## Claims

1. Use, in a composition of paint type, as an additive that improves the durability of the composition, of an organic cerium sol which consists of cerium particles in the form of agglomerates of crystallites, the d₈₀ of which is at most equal to 10 nanometres, of an amphiphilic acid system and of an organic phase, the amphiphilic acid system comprising at least one acid containing 11 to 50 carbon atoms, having at least one branch at the alpha, beta, gamma or delta position of the atom bearing the acid hydrogen.

2. Use according to Claim 1, **characterized in that** the particles of the cerium sol have a size of at most 200 nanometres.

3. Use according to Claim 1, **characterized in that** the particles of the cerium sol have a size of at most 100 nanometres.

4. Use according to one of the preceding claims, **characterized in that** the cerium sol comprises cerium particles in the form of agglomerates of crystallites, the d₈₀ of which is at most equal to 8 nanometres.

5. Use according to one of the preceding claims, **characterized in that** 80% (by weight) of the agglomerates comprise from 3 to 4 crystallites.

6. Use according to one of the preceding claims, **characterized in that** the molar ratio between the acid(s) of the amphiphilic system and the cerium element is between 1/5 and 4/5.

7. Use according to one of the preceding claims, **characterized in that** the amphiphilic acid system contains isostearic acid.

8. Use according to one of the preceding claims, **characterized in that** the content of cerium in the composition, expressed as cerium oxide, is at most 25%, preferably at most 3%, by weight relative to the whole of the composition.

9. Use according to one of the preceding claims, **characterized in that** the composition is a UV-curable composition, in particular a lacquer.

## Patentansprüche

1. Verwendung eines organischen Cer-Sols, das aus Cerpartikeln in Form von Agglomeraten aus Kristalliten, deren d₈₀ höchstens 10 Nanometer beträgt, aus einem amphiphilen sauren System und aus einer organischen Phase besteht, in einer Zusammensetzung des Typs Anstrichmittel als Zusatzstoff, der die Haltbarkeit der Zusammensetzung verbessert, wobei das amphiphile saure System mindestens eine Säure mit 11 bis 50 Kohlenstoffatomen aufweist, die mindestens eine Verzweigung in alpha-, beta-, gamma- oder delta-Stellung zum Atom aufweist, an welchem sich der saure Wasserstoff befindet.

2. Verwendung nach Anspruch 1, **dadurch gekennzeichnet, dass** die Partikel des Cer-Sols eine Größe von höchstens 200 Nanometern haben.

3. Verwendung nach Anspruch 1, **dadurch gekennzeichnet, dass** die Partikel des Cer-Sols eine Größe von höchstens 100 Nanometern haben.

4. Verwendung nach einem der vorhergehenden Ansprüche, **dadurch gekennzeichnet, dass** das Cer-Sol Cerpartikel in Form von Agglomeraten aus Kristalliten umfasst, deren d₈₀ höchstens 8 Nanometer beträgt.

5. Verwendung nach einem der vorhergehenden Ansprüche, **dadurch gekennzeichnet, dass** 80% (nach Masse) der Agglomerate 3 bis 4 Kristallite aufweisen.

6. Verwendung nach einem der vorhergehenden Ansprüche, **dadurch gekennzeichnet, dass** das Molverhältnis zwischen der oder den Säuren des amphiphilen Systems und dem Element Cer im Bereich von 1/5 bis 4/5 liegt.

7. Verwendung nach einem der vorhergehenden Ansprüche, **dadurch gekennzeichnet, dass** das amphiphile saure System Isostearinsäure enthält.

8. Verwendung nach einem der vorhergehenden Ansprüche, **dadurch gekennzeichnet, dass** der Gehalt an Cer in der Zusammensetzung, ausgedrückt als Ceroxid, höchstens 25 Gew.-%, vorzugsweise höchstens 3 Gew.-%, bezogen auf die Zusammensetzung insgesamt, beträgt.

9. Verwendung nach einem der vorhergehenden Ansprüche, **dadurch gekennzeichnet, dass** es sich bei der Zusammensetzung um eine Zusammensetzung handelt, die UV-vernetzbar ist, insbesondere um eine Lasur.
